(19) Europäisches Patentamt / European Patent Office / Office européen des brevets

(11) **EP 4 224 574 A1**

(12) **EUROPEAN PATENT APPLICATION**
published in accordance with Art. 153(4) EPC

(43) Date of publication:
**09.08.2023 Bulletin 2023/32**

(21) Application number: **21885236.6**

(22) Date of filing: **28.10.2021**

(51) International Patent Classification (IPC):
$H01M\ 4/36$ (2006.01)  $H01M\ 4/485$ (2010.01)
$H01M\ 4/505$ (2010.01)  $H01M\ 4/54$ (2006.01)
$H01M\ 4/56$ (2006.01)  $H01M\ 4/58$ (2010.01)
$H01M\ 10/0525$ (2010.01)  $H01M\ 4/525$ (2010.01)

(52) Cooperative Patent Classification (CPC):
H01M 4/36; H01M 4/485; H01M 4/505;
H01M 4/525; H01M 4/54; H01M 4/56; H01M 4/58;
H01M 10/0525; Y02E 60/10

(86) International application number:
**PCT/CN2021/126905**

(87) International publication number:
**WO 2022/089509 (05.05.2022 Gazette 2022/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.10.2020  CN 202011175816**

(71) Applicant: **BYD Company Limited
Shenzhen, Guangdong 518118 (CN)**

(72) Inventors:
• **CHEN, Na**
  **Shenzhen, Guangdong 518118 (CN)**
• **HAO, Rong**
  **Shenzhen, Guangdong 518118 (CN)**
• **PAN, Yi**
  **Shenzhen, Guangdong 518118 (CN)**

(74) Representative: **Arnold & Siedsma
Bezuidenhoutseweg 57
2594 AC The Hague (NL)**

(54) **LITHIUM ION BATTERY**

(57)    A lithium ion battery is provided, which includes a positive electrode sheet and a negative electrode sheet. The positive electrode active material of the positive electrode sheet includes lithium manganese iron phosphate and a ternary material. The negative electrode active material of the negative electrode sheet is graphite. The lithium ion battery meets the following formulas:

$$1.08 \le (M_3 * \eta_3 * y)/[(M_1 * \eta_1 * A_1 + M_2 * \eta_2 * A_2) * x] \le 1.12 \quad (1)$$

and

$$0.49 \le [M_1 * (1-\eta_1) * A_1 + M_2 * (1-\eta_2) * A_2] * x/[M_3 * (1-\eta_3) * y] \le 1.15 \quad (2)$$

where $M_1$ is the first-charge specific capacity of lithium manganese iron phosphate, unit: mAh/g; $\eta_1$ is the initial efficiency of lithium manganese iron phosphate; $A_1$ is the percent by mass of lithium manganese iron phosphate in the positive electrode active material; $M_2$ is the first-charge specific capacity of the ternary material, unit: mAh/g; $\eta_2$ is the initial efficiency of the ternary material; $A_2$ is the percent by mass of the ternary material in the positive electrode active material; $M_3$ is the first-discharge specific capacity of graphite, unit: mAh/g; $\eta_3$ is the initial efficiency of graphite; and x is the coating amount of the positive electrode active material, and y is the coating amount of the negative electrode active material, where x and y are expressed in the same unit.

**(Cont. next page)**

FIG. 1

**Description**

## CROSS REFERENCE TO RELATED APPLICATIONS

The present disclosure claims priority of Chinese Patent Application No. 202011175816.X filed on October 28, 2020 and entitled "Lithium ion battery", which is incorporated herein by reference in its entirety.

## FIELD

The present disclosure relates to the technical field of power devices, and specifically to a lithium ion battery.

## BACKGROUND

With the rising awareness of energy and environmental protection, new energy vehicles have been developed significantly in recent years. Among them, electric vehicle is one of the main directions. Among power batteries for electric vehicles, lithium-ion batteries occupy a very important position. As an important component in lithium ion batteries, the choice of positive electrode material directly affects the performance of lithium ion batteries. Lithium manganese iron phosphate (abbreviated as LMFP) positive electrode material is a mainstream positive electrode material in lithium ion batteries due to its high structural stability, and good cycle and safety performances.

Lithium manganese iron phosphate has relatively high theoretical specific capacity and initial efficiency, and can provide a higher capacity for lithium ion batteries. However, the graphite negative electrode active material of lithium ion battery forms an SEI film during the charge and discharge process, and active lithium from lithium manganese iron phosphate is consumed in the SEI film forming process, reducing the actual specific capacity of lithium manganese iron phosphate, and restricting the exertion of capacity of lithium manganese iron phosphate in lithium ion batteries.

## SUMMARY

An embodiment of the present disclosure provides a lithium ion battery, to solve the problem of difficult exertion of the specific capacity of lithium manganese iron phosphate in traditional lithium ion batteries.

To solve the above problems, the following technical solutions are provided in the present disclosure.

An embodiment of the present disclosure provides a lithium ion battery, which includes

a positive electrode sheet and a negative electrode sheet. The positive electrode active material of the positive electrode sheet includes lithium manganese iron phosphate and a ternary material. The negative electrode active material of the negative electrode sheet is graphite. The lithium ion battery meets the following formulas:

$$1.08 \leq (M_3 * \eta_3 * y)/[(M_1 * \eta_1 * A_1 + M_2 * \eta_2 * A_2) * x] \leq 1.12 \quad (1)$$

and

$$0.49 \leq [M_1 * (1-\eta_1) * A_1 + M_2 * (1-\eta_2) * A_2] * x/[M_3 * (1-\eta_3) * y] \leq 1.15 \quad (2)$$

where $M_1$ is the first-charge specific capacity of the lithium manganese iron phosphate, unit: mAh/g; $\eta_1$ is the initial efficiency of the lithium manganese iron phosphate; $A_1$ is the percent by mass of the lithium manganese iron phosphate in the positive electrode active material; $M_2$ is the first-charge specific capacity of the ternary material, unit: mAh/g; $\eta_2$ is the initial efficiency of the ternary material; $A_2$ is the percent by mass of the ternary material in the positive electrode active material; $M_3$ is the first-discharge specific capacity of the graphite, unit: mAh/g; $\eta_3$ is the initial efficiency of the graphite; and x is the coating amount of the positive electrode active material, and y is the coating amount of the negative electrode active material, where x and y are expressed in the same unit.

According to some embodiments of the present disclosure, in the positive electrode sheet of the lithium ion battery, the actual full-cell specific capacity of the lithium manganese iron phosphate is greater than 138 mAh/g.

According to some embodiments of the present disclosure, the lithium ion battery meets the following formula:

$$0.64 \leq [M_1 * (1-\eta_1) * A_1 + M_2 * (1-\eta_2) * A_2] * x/[M_3 * (1-\eta_3) * y] \leq 1.05.$$

According to some embodiments of the present disclosure, the lithium ion battery further includes an electrolyte, and the lithium ion battery meets the following formula:

$$0.6 \leq (M_1 * \eta_1 * A_1 + M_2 * \eta_2 * A_2) * b * c / (a * A_2 * 1000) \leq 2.91 \qquad (3)$$

where a is the residual alkali content in the ternary material, b is the electrolyte injection coefficient of the lithium ion battery, and c is the residual $H_2O$ content in the electrolyte; and a is in the range of 500ppm-1500 ppm, b is in the range of 2.9 g/Ah -3.8 g/Ah, and c is in the range of 200 ppm -400 ppm.

According to some embodiments of the present disclosure, the Mn dissolution of the lithium ion battery after 2000 charge-discharge cycles at 45°C is less than 700 ppm.

According to some embodiments of the present disclosure, the lithium ion battery meets the following formula:

$$0.75 \leq (M_1 * \eta_1 * A_1 + M_2 * \eta_2 * A_2) * b * c / (a * A_2 * 1000) \leq 1.48 .$$

According to some embodiments of the present disclosure, the ratio of y to x is in the range of 0.52-0.58.

According to some embodiments of the present disclosure, based on the total mass of the positive electrode active material, $A_1$ is in the range of 75%-95%.

According to some embodiments of the present disclosure, the ternary material is represented by a general formula of $LiNi_{a1}Co_{b1}X_{c1}C_2$,

where $0 \leq a1 \leq 1$, $0 \leq b1 \leq 1$, $0 \leq c1 \leq 1$, and $a1+b1+c1=1$; and X is at least one metal element from Group IIIB to Group VA.

According to some embodiments of the present disclosure, based on the total molar amount of Ni, Co and X in the ternary material, the percent by mole of Ni in the ternary material is in the range of 80%-95%.

The following beneficial effects are achieved by means of the technical solutions provided in the embodiments of the present disclosure:

In the positive electrode active material on the positive electrode sheet of the lithium ion battery provided in the embodiment of the present disclosure, the ternary material and the lithium manganese iron phosphate are used in admixture, and the lithium manganese iron phosphate, the ternary material and the negative electrode active material graphite meet the relations of Formulas (1) and (2). As a result, the initial efficiency of the mixed positive electrode active material and the initial efficiency of the graphite are balanced, to ensure the effective exertion of the capacity of the lithium manganese iron phosphate, so as to improve the energy density and cycle performance of the lithium ion battery while ensuring the safety of the lithium ion battery.

Additional aspects and advantages of the present disclosure will be partly given in the following description, some of which will become apparent from the following description, or may be learned from practices of the present disclosure.

## BRIEF DESCRIPTION OF THE DRAWINGS

The accompanying drawings illustrated here are intended to provide further understanding of the present disclosure and constitute a part of present disclosure. The schematic embodiments and description thereof in the present disclosure are provided for explaining the present disclosure, and do not constitute a restriction on the present disclosure. In the accompanying drawings:

Fig. 1 shows the cyclic voltammetry (CV) curves of a ternary material, LFMP, and a mixed material of the ternary material and LFMP; and

Fig. 2 shows the first charge/discharge cycle curves of a ternary material, LFMP, and a mixed material of the ternary material and LFMP.

## DETAILED DESCRIPTION

To make the objects, technical solutions and advantages of the present application clearer, the technical solutions of the present disclosure will be clearly and fully described below in conjunction with specific embodiments and corresponding drawings. Obviously, the embodiments described are merely some, rather than all of the embodiments of the present application. All other embodiments obtained by a person of ordinary skill in the art based on the embodiments of the present application without creative efforts fall within the scope of protection of the present disclosure.

The term "first", "second", and the like used in the specification and claims of the present disclosure are used to distinguish similar objects, rather than describe a particular order or sequence. It should be understood that the data thus used are interchangeable where appropriate so that embodiments of the present disclosure can be implemented in an order other than those illustrated or described herein. The objects distinguished by the words "first" and "second" are usually the same kind, and the number of objects are not limited thereto. For example, the number of the first object may be one, or multiple. Moreover, "and/or" in the specification and claims indicates at least one of the connected objects, and the symbol "/" generally indicates an or relationship between the preceding and following objects.

With reference to the accompanying drawings, the technical solutions disclosed in the embodiments of the present disclosure will be described in detail.

An embodiment of the present disclosure provides a lithium ion battery, which includes a positive electrode sheet and a negative electrode sheet. The positive electrode active material of the positive electrode sheet includes lithium manganese iron phosphate (LMFP) and a ternary material. The negative electrode active material of the negative electrode sheet is graphite. The lithium ion battery meets the following formula:

$$1.08 \leq (M_3 * \eta_3 * y)/[(M_1 * \eta_1 * A_1 + M_2 * \eta_2 * A_2) * x] \leq 1.12 \quad (1)$$

and

$$0.49 \leq [M_1*(1-\eta_1)*A_1 + M_2*(1-\eta_2)*A_2]*x/[M_3*(1-\eta_3)*y] \leq 1.15 \quad (2)$$

where $M_1$ is the first-charge specific capacity of LMFP, unit: mAh/g; $\eta_1$ is the initial efficiency of LMFP, $A_1$ is the percent by mass of LMFP in the positive electrode active material, $M_2$ is the first-charge specific capacity of the ternary material, unit: mAh/g; $\eta_2$ is the initial efficiency of the ternary material; $A_2$ is the percent by mass of the ternary material in the positive electrode active material; $M_3$ is the first-discharge specific capacity of the graphite, unit: mAh/g; $\eta_3$ is the initial efficiency of the graphite; and x is the coating amount of the positive electrode active material, and y is the coating amount of the negative electrode active material, where x and y are expressed in the same unit, and the ratio of y to x is in the range of 0.52-0.58.

Specifically, for the positive electrode active material, the initial efficiency is a ratio of the first discharge capacity to the first charge capacity of a button cell; and for the negative electrode active material, the initial efficiency is a ratio of the first charge capacity to the first discharge capacity of the button cell.

Further, assuming that $[M_1*(1-\eta_1)*A_1 + M_2*(1-\eta_2)*A_2]*x/[M_3*(1-\eta_3)*y]$ in Formula 2 is $\alpha$, $\alpha$ is in the range of 0.64-1.05 according to an embodiment of the present disclosure.

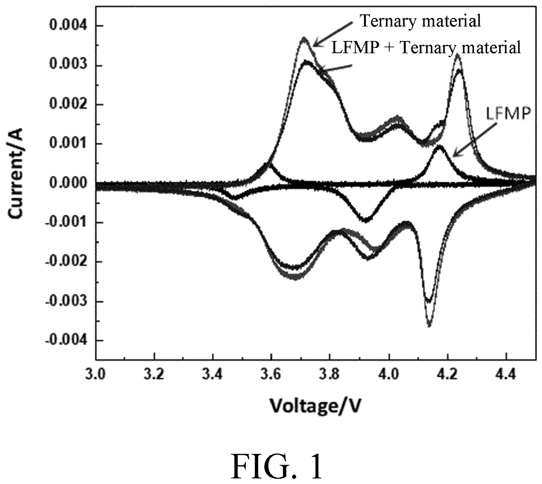

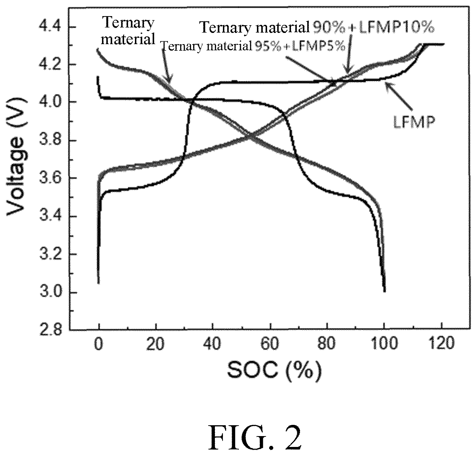

Specifically, referring to Figs. 1 and 2, the voltage plateau of Mn in LMFP is about 4.15V (vs. Li), and the voltage plateau over H2-H3 phase change of the ternary material is about 4.25V (vs. Li). The voltage plateaus of LMFP and the ternary material have voltage synergistic effect, and this synergistic effect can reduce the surface structural instability caused by the H2-H3 phase change of the ternary material itself. Therefore, the ternary material in the positive electrode active material is not prone to H2-H3 phase change, which is beneficial to the structural stability of the ternary material, and improves the safety and cycle performance of the ternary material itself. Therefore, by the positive electrode active material obtained by mixing LMFP and the ternary material, the double voltage plateaus of the positive electrode active material are avoided, thus facilitating the full exertion of the capacity of various materials in the positive electrode active material. Moreover, LMFP has higher safety performance compared with the ternary material, thus improving the safety of the lithium ion battery.

During the first charge and discharge process of the lithium ion battery, the formation of SEI film on the surface of the negative electrode requires the consumption of active lithium from the positive electrode active material. When the negative electrode material is graphite, since the initial efficiency of graphite is smaller than that of the LMFP material, low amount of irreversible lithium caused by the problem of initial efficiency of the LMFP material when only the LMFP material is used as the positive electrode active material is not sufficient to form the SEI film on graphite. Accordingly, active lithium in LMFP is additionally consumed by graphite, reducing the exertion of actual specific capacity of LMFP, and causing a low energy density of the lithium ion battery. The initial efficiency of the ternary material is less than that of graphite, and more irreversible lithium left in the negative electrode by the ternary material is sufficient to form an SEI film on graphite. When LMFP and the ternary material are used in admixture, the ternary material functions to supply lithium to LMFP, thus improving the actual full-cell specific capacity of LMFP, and improving the energy density of the lithium ion battery.

In the design of a lithium ion battery, the ratio of the capacity provided by the negative electrode sheet to the capacity provided by the positive electrode sheet in the battery is called N/P (gram capacity of negative electrode active material × surface density of negative electrode × content ratio of negative electrode active material)/(gram capacity of positive electrode active material × surface density of positive electrode × content ratio of positive electrode active material) ratio. The ratio is generally in the range of 1.08 to 1.12, that is, the range shown in Formula 1. More importantly, because the initial efficiency of the ternary material is lower than the initial efficiency of graphite, and the initial efficiency of graphite is lower than the initial efficiency of LMFP, when the ternary material and the LMFP material are used in admixture, the mixing ratio needs to be controlled to a certain range, to enable the initial efficiency of the mixed positive electrode active material and the initial efficiency of the graphite material to reach a balance. The mixing ratio needs to meet the range shown by Formula 2. If Formula 2 is met, the exertion of actual specific capacity of the LMFP material in the positive electrode active material can be improved, so as to improve the energy density of the lithium ion battery while ensuring the safety of the lithium ion battery.

According to a further embodiment of the present disclosure, the full-cell specific capacity of LMFP in the positive electrode sheet of the lithium ion battery is greater than 138 mAh/g, which is an actual capacity of the LMFP material in the charge and discharge process of the lithium ion battery, and generally less than the theoretical specific capacity of the LMFP material. Based on the total mass of the positive electrode active material, the percent by mass of LMFP in the positive electrode active material is in the range of 75%-95%.

Specifically, when the ternary material and the LMFP material are used in admixture and the proportion of the ternary material is too low, the loss of lithium ions caused by the low initial efficiency of the ternary material is also too low, and these lithium ions are not sufficient for the graphite to consume and form the SEI film. The formation of SEI film on the graphite in the negative electrode sheet requires the consumption of additional lithium ions in LMFP, causing a low actual specific capacity of LMFP in the positive electrode sheet. When the proportion of the ternary material in the positive electrode active material is too high, the poor structural stability of the ternary material compared with LMFP will lead to a low cycling capacity retention rate of the mixed system of positive electrode active material, and also the low safety performance of the ternary material during the charge and discharge process is not conducive to the safe use of lithium ion battery. Therefore, when the initial efficiency of the mixed positive electrode active material and the initial efficiency of graphite in the lithium ion battery are balanced, that is, the ratio range shown in Formula 2 is met, the full-cell specific capacity of LMFP in the positive electrode sheet of the lithium ion battery can reach 138 mAh/g or even higher, thus ensuring the actual specific capacity of the LMFP material in the positive electrode active material.

According to a further embodiment of the present disclosure, the lithium ion battery further includes an electrolyte, and The lithium ion battery meets the following formula:

$$0.6 \leq (M_1 * \eta_1 * A_1 + M_2 * \eta_2 * A_2) * b * c / (a * A_2 * 1000) \leq 2.91 \qquad (3)$$

where a is the residual alkali content in the ternary material, unit: ppm; b is the electrolyte injection coefficient of the lithium ion battery, unit: g/Ah; and c is the residual $H_2O$ content in the electrolyte, unit: ppm.

Further, assuming that $(M_1 * \eta_1 * A_1 + M_2 * \eta_2 * A_2) * b * c / (a * A_2 * 1000)$ in Formula 3 is $\beta$, $\beta$ is in the range of 0.75-1.48 according to an embodiment of the present disclosure.

Particularly, in the practical preparation process of the battery, a certain amount of trace water inevitably exist in the electrolyte. $H_2O$ tends to react with a lithium salt such as lithium hexafluorophosphate in the electrolyte to produce hydrofluoric acid (HF), and HF causes the dissolution of Fe and Mn in LMFP, reducing the structural stability of the LMFP material and the cycle life of the lithium ion battery. Residual alkali on the surface of the ternary material will react with HF in the electrolyte, that is, HF will be consumed. This help to inhibits the dissolution of Fe and Mn in the LMFP material, and the inhibition of the dissolution of Mn is a more obvious, thus facilitating the improvement of the cycle performance of the positive electrode active material and the increase of the service life of the lithium ion battery. Accordingly, the residual alkali content in the ternary material, the electrolyte injection coefficient in the lithium ion battery and the residual $H_2O$ content in the electrolyte need to meet the ratio range shown in Formula 3, to achieve the purposes of making full use of the residual alkali on the surface of the ternary material to effectively consume HF in the electrolyte and increasing the service life of the lithium ion battery.

According to a further embodiment of the present disclosure, the Mn dissolution of the lithium ion battery after 2000 charge-discharge cycles at 45°C is less than 700 ppm.

Specifically, during the charge and discharge process of the lithium ion battery, when relatively much HF is present in the electrolyte, the dissolution of Fe and Mn in the LMFP material is relatively high, destroying the structural integrity of the LMFP material, and reducing the cycle and rate performances of the LMFP material. After HF in the electrolyte is effectively consumed by residual alkali on the surface of the ternary material, the dissolution of Fe and Mn, particularly, the dissolution of Mn, in the LMFP material is greatly reduced. As a result, the Mn dissolution is still less than 700 ppm after 2000 charge-discharge cycles of the lithium ion battery at 45°C, so the cycle performance of the battery is improved.

According to a further embodiment of the present disclosure, a is in the range of 500 ppm -1500 ppm, b is in the range of 2.9 g/Ah -3.8 g/Ah, and c is in the range of 200 ppm -400 ppm.

Specifically, when the residual alkali content on the surface of the ternary material is in the range of 500 ppm -1500 ppm, the electrolyte injection coefficient is in the range of 2.9 g/Ah -3.8 g/Ah, and the residual $H_2O$ content in the electrolyte is in the range of 200 ppm - 400 ppm, HF generated through reaction of $H_2O$ with lithium hexafluorophosphate

in the electrolyte can react with residual alkali on the surface of the ternary material, to consume HF and ensure the cycle performance of the positive electrode active material and the service life of the lithium ion battery.

According to a further embodiment of the present disclosure, the ternary material is represented by a general formula of $LiNi_{a1}Co_{b1}X_{c1}C_2$,

where $0 \leq a1 \leq 1$, $0 \leq b1 \leq 1$, $0 \leq c1 \leq 1$, and $a1+b1+c1=1$; and X is at least one metal element from Group IIIB to Group VA.

Particularly, element Mn in the ternary material may be partially or totally replaced by Al, Zr, Ti, Y, Sr, W and other elements, to improve the safety and stability and the integrity of the crystal structure of the ternary material.

According to a specific embodiment of the present disclosure, based on the total molar amount of Ni, Co and X in the ternary material, the percent by mole of Ni in the ternary material is in the range of 80%-95%.

Specifically, if the percent by mole of Ni in the ternary material is in the range of 80%-95%, the ternary material is called high-nickel ternary material. The high-nickel ternary material has the advantages of low cost, high energy density, high reversible capacity and environmental friendliness, and the like, so the specific capacity of the lithium ion battery can be greatly improved. Despite of the poor safety performance of the high-nickel ternary material, when LMFP is mixed with the high-nickel ternary material at a ratio falling in a certain range, the original safety performance of the LMFP material system can be ensured, to ensure the battery safety.

Hereinafter, the technical solutions of the present invention will be described in detail below in the form of specific embodiments.

Choice of positive electrode active material:

LMFP with first-charge specific capacity of 165 mAh/g and initial efficiency of 98%, and high-nickel ternary material (molar ratio of Ni: Co:Mn=0.83:0.12:0.05) with first-charge specific capacity of 238 mAh/g and initial efficiency of 86% are selected, the LMFP and the high-nickel ternary material are mixed to form a positive electrode active material, in which the percent by mass of LMFP in the positive electrode active material is $A_1$, and the percent by mass of the high-nickel ternary material in the positive electrode active material is $A_2$, where $A_1+A_2=1$. The residual alkali content on the high-nickel ternary material is 700 ppm.

Choice of negative electrode active material:

Graphite with first-discharge capacity of 355 mAh/g and initial efficiency of 95% is selected.

Choice of electrolyte:

The injection coefficient of electrolyte in the lithium ion battery is 3.1g/Ah, and the residual $H_2O$ content in the electrolyte after the lithium ion battery is assembled is 200 ppm.

A lithium ion battery is prepared with the positive electrode active material, the negative electrode active material and electrolyte selected above. The preparation process includes:

S101: N-methylpyrrolidone (NMP) and polyvinylidene fluoride (PVDF) are added into a blender and stirred for 1 hr. Then conductive graphite is added as a conductive agent and stirred for 0.5 hr. Then the positive electrode active material (the lithium manganese iron phosphate and the ternary material) is added and stirred for 1.5 hrs to form a positive electrode slurry. The positive electrode slurry is sieved and coated on an aluminum foilcurrent collector. The aluminum foil coated with the positive electrode slurry is dried under vacuum at 80°C for 12 hrs. Finally, the dried aluminum foil coated with the positive electrode slurry is rolled and sliced to obtain a positive electrode sheet. The one-sided surface density of the positive electrode sheet is 2.0 g/dm$^2$, and the compaction density of the positive electrode sheet is 2.6 g/cm$^3$.

S 102: Water, styrene-butadiene rubber (SBR) and sodium carboxymethyl cellulose (CMC) are mixed, and then added to a blender and stirred for 1 hrs. Then conductive graphite is added as a conductive agent and stirred for 0.5 hr. Then graphite as a negative electrode active material is added and stirred for 1.5 hrs to form a negative electrode slurry. The negative electrode slurry is sieved and coated on a copper foil current collector. The copper foil coated with the negative electrode slurry is dried under vacuum at 100°C for 12 hrs. Finally, the dried copper foil coated with the negative electrode slurry is rolled and sliced to obtain a negative electrode sheet.

S103: The positive electrode sheet, a separator, and a negative electrode sheet are placed in a battery housing, with the separator (PE separator coated with ceramic on both sides) being located between the positive electrode sheet and the negative electrode sheet. The electrolyte (including a solvent and $LiPF_6$, where the solvent includes ethylene carbonate (EC), dimethyl carbonate (DMC) and methyl ethyl carbonate (EMC), and the volume ratio of ethylene carbonate (EC), dimethyl carbonate (DMC) and methyl ethyl carbonate (EMC) is 1:1:1; and the concentration of $LiPF_6$ in the electrolyte is 1 mol/L) is injected and then battery house is sealed, to obtain a lithium ion battery.

Specifically, lithium ion batteries of the following Examples 1 to 5 and Comparative Examples 1 and 2 are obtained.

### Example 1

The percent by mass $A_1$ of LMFP in the positive electrode active material was 95%, and the percent by mass $A_2$ of the high-nickel ternary material in the positive electrode active material was 5%.

### Example 2

The percent by mass $A_1$ of LMFP in the positive electrode active material was 91.1%, and the percent by mass $A_2$ of the high-nickel ternary material in the positive electrode active material was 8.9%.

### Example 3

The percent by mass $A_1$ of LMFP in the positive electrode active material was 88%, and the percent by mass $A_2$ of the high-nickel ternary material in the positive electrode active material was 12%.

### Example 4

The percent by mass $A_1$ of LMFP in the positive electrode active material was 85.5%, and the percent by mass $A_2$ of the high-nickel ternary material in the positive electrode active material was 14.5%.

### Example 5

The percent by mass $A_1$ of LMFP in the positive electrode active material was 75%, and the percent by mass $A_2$ of the high-nickel ternary material in the positive electrode active material was 25%.

### Comparative Example 1

The percent by mass $A_1$ of LMFP in the positive electrode active material was 98%, and the percent by mass $A_2$ of the high-nickel ternary material in the positive electrode active material was 2%.

### Comparative Example 2

The percent by mass $A_1$ of LMFP in the positive electrode active material was 70%, and the percent by mass $A_2$ of the high-nickel ternary material in the positive electrode active material was 30%.

By controlling the ratio y/x=0.55, where the coating amount of graphite on the negative electrode sheet is y and the coating amount of the positive electrode active material on the positive electrode sheet is x (where x and y are expressed in the same unit), the lithium ion batteries of Examples 1 to 5 and Comparative Examples 1 and 2 were checked by Formulas 2 and 3, to obtain the values of $\alpha$ and $\beta$. The specific capacity test of LMFP in the positive electrodes, the capacity retention rate test after 2000 cycles at 45°C, the Mn dissolution test after 2000 cycles at 45°C, and the thermal runaway triggering temperature test of the positive electrode active material by differential scanning calorimetry (DSC) were performed for the lithium ion batteries of Examples 1 to 5 and Comparative Examples 1 and 2. The test process was specifically as follows:

### Test of full-cell specific capacity of LMFP in positive electrode:

At normal temperature (25°C), the lithium ion battery was charged at a rate of 0.1C and discharged at a rate of 0.1C. The charge and discharge voltage was in the range of 2.5 - 4.2 V, and three charge-discharge cycles were carried out. The full-cell specific capacity of LMFP in the positive electrode was calculated based on the coating amount on the electrode sheet and the third discharge capacity of the lithium ion battery.

### Test of capacity retention rate after 2000 charge-discharge cycles:

The lithium ion battery was charged at a rate of 1C and discharged at a rate of 1C. The charge-discharge voltage was in the range of 2.5-4.2 V. After 2000 charge-discharge cycles at 45°C, the capacity retention rate of the battery after 2000 cycles was obtained according to the ratio of the discharge capacity of the battery in the first cycle and the 2000th cycle.

**Test of Mn dissolution after 2000 charge-discharge cycles:**

The lithium ion battery was disassembled after 2000 charge-discharge cycles at 45°C. The negative electrode active material of the negative electrode sheet was taken out, and the Mn dissolution in the negative electrode active material was measured by ICP.

**Test of thermal runaway triggering temperature of positive electrode active material by DSC:**

The positive electrode active material of the lithium ion battery was charged to a full state of charge (specifically by charging at a constant current of 0.1C to a cut-off voltage of 4.2V, and then charging at a constant voltage of 4.2V to a cut-off current of 0.05C). The positive electrode sheet in a full state of charge and an electrolyte were added to high-temperature dry pot, and heated at a ramping rate of 5°C/min. The thermogram was tested by differential scanning calorimetry (DSC), to observe the thermal runaway triggering temperature of the positive electrode material.

Table 1 shows the checking data by Formula 2 and Formula 3 and test data of lithium ion batteries of Examples 1 to 5 and Comparative Examples 1 and 2 .

Table 1. Checking and test data of lithium ion batteries in various examples

| Examples | $\alpha$ | $\beta$ | Full-cell specific capacity of LMFP in positive electrode (mAh/g) | Capacity retention rate after 2000 charge-discharge cycles (%) | Mn dissolution after 2000 charge-discharge cycles (ppm) | Thermal runaway triggering temperatur e of positive electrode active material by DSC (°C) |
|---|---|---|---|---|---|---|
| Example 1 | 0.49 | 2.90 | 138 | 70 | 700 | 255 |
| Example 2 | 0.61 | 1.65 | 139 | 80 | 650 | 250 |
| Example 3 | 0.71 | 1.23 | 140 | 77 | 600 | 245 |
| Example 4 | 0.78 | 1.03 | 139 | 74 | 620 | 248 |
| Example 5 | 1.11 | 0.61 | 141 | 72 | 680 | 243 |
| Comparativ e Embodime nt 1 | 0.40 | 7.20 | 134 | 55 | 1350 | 251 |
| Comparativ e Embodime nt 2 | 1.26 | 0.52 | 135 | 60 | 1000 | 235 |

Remarks: Mn dissolution after 2000 charge-discharge cycles in Table 1 is equivalent to the Mn dissolution from LMFP solely.

As can be seen from Table 1, after the lithium ion batteries of Examples 1 to 5 are checked by Formulas 2 and 3, both $\alpha$ and $\beta$ are within the range defined by Formula 2 and Formula 3 of the present disclosure, that is, $0.49 \leq \alpha \leq 1.15$, and $0.6 \leq \beta \leq 2.91$. The full-cell specific capacity of LMFP in the positive electrode sheet of the lithium ion battery is greater than 138 mAh/g, the full-cell specific capacity of LMFP in the positive electrode sheet of the lithium ion battery in Example 5 reaches 141 mAh/g. The capacity retention rate of the lithium ion battery after 2000 charge-discharge cycles is greater than 70%, the capacity retention rate of the lithium ion battery in Example 2 reaches 80%. The Mn dissolution of the lithium ion battery after 2000 charge-discharge cycles is less than 700 ppm, the Mn dissolution of the lithium ion battery in Example 3 after 2000 charge-discharge cycles is only 600 ppm. In terms of the safety, due to the effective cooperation between LMFP and the high-nickel ternary material, the positive electrode active materials of the lithium ion batteries in Examples 1 to 5 have a thermal runaway triggering temperature of greater than 243°C as tested by DSC. Therefore, the lithium ion battery can operate safely at a temperature below 243°C, so the safety of the lithium ion battery is improved.

After the lithium ion batteries of Comparative Examples 1 and 2 are checked by Formulas 2 and 3, it is found that both $\alpha$ and $\beta$ are not within the range defined by Formula 2 and Formula 3 of the present disclosure, that is, $\alpha$ does not fall in the range of 0.49 to 1.15, and $\beta$ does not fall in the range of 0.6 to 2.91. Moreover, the full-cell specific capacity of LMFP in the positive electrode sheet of the lithium ion battery is less than 135mAh/g. The capacity retention rate of the lithium ion battery after 2000 charge-discharge cycles is less than 60%. The Mn dissolution of the lithium ion battery after 2000 charge-discharge cycles is greater than 1000 ppm. The Mn dissolution of the lithium ion battery in Comparative Example 1 after 2000 charge-discharge cycles even reaches 1350 ppm. In terms of the safety, since relatively much high-nickel ternary material is contained in the positive electrode active material of the lithium ion battery in Comparative Example 2, the thermal runaway triggering temperature of the positive electrode active material tested by DSC is only 235°C, restricting the use of the lithium ion battery at high temperatures.

Embodiments of the present disclosure have been described above in conjunction with the drawings; however, the present disclosure is not limited thereto. The specific embodiments described above are merely illustrative, and not limiting. Various forms which can be made by those of ordinary skill in the art with the teachings of the present disclosure, without departing from the spirit and scope of protection defined by claims of the present disclosure, all fall within the scope of protection of the present disclosure.

**Claims**

1. A lithium ion battery, comprising:
   a positive electrode sheet and a negative electrode sheet, wherein the positive electrode sheet comprises a positive electrode active material, the positive electrode active material comprises lithium manganese iron phosphate and a ternary material, the negative electrode sheet comprises a negative electrode active material, the negative electrode active material is graphite; and the lithium ion battery meets the following formulas:

$$1.08 \leq (M_3 * \eta_3 * y)/[(M_1 * \eta_1 * A_1 + M_2 * \eta_2 * A_2) * x] \leq 1.12 \qquad (1)$$

and

$$0.49 \leq [M_1 * (1-\eta_1) * A_1 + M_2 * (1-\eta_2) * A_2] * x/[M_3 * (1-\eta_3) * y] \leq 1.15 \quad (2)$$

   wherein $M_1$ is the first-charge specific capacity of the lithium manganese iron phosphate, unit: mAh/g; $\eta_1$ is the initial efficiency of the lithium manganese iron phosphate; $A_1$ is the percent by mass of the lithium manganese iron phosphate in the positive electrode active material; $M_2$ is the first-charge specific capacity of the ternary material, unit: mAh/g; $\eta_2$ is the initial efficiency of the ternary material; $A_2$ is the percent by mass of the ternary material in the positive electrode active material; $M_3$ is the first-discharge specific capacity of the graphite, unit: mAh/g; $\eta_3$ is the initial efficiency of the graphite; and x is the coating amount of the positive electrode active material, and y is the coating amount of the negative electrode active material, where x and y are expressed in the same unit.

2. The lithium ion battery according to claim 1, wherein in the positive electrode sheet of the lithium ion battery, the actual full-cell specific capacity of the lithium manganese iron phosphate is greater than 138 mAh/g.

3. The lithium ion battery according to claim 1 or 2, wherein the lithium ion battery meets the following formula:

$$0.64 \leq [M_1 * (1-\eta_1) * A_1 + M_2 * (1-\eta_2) * A_2] * x/[M_3 * (1-\eta_3) * y] \leq 1.05.$$

4. The lithium ion battery according to any one of claims 1 to 3, further comprising an electrolyte, wherein the lithium ion battery meets the following formula:

$$0.6 \leq (M_1 * \eta_1 * A_1 + M_2 * \eta_2 * A_2) * b * c/(a * A_2 * 1000) \leq 2.91 \qquad (3)$$

   wherein a is the residual alkali content in the ternary material, b is the electrolyte injection coefficient of the lithium ion battery, c is the residual $H_2O$ content in the electrolyte, a is in the range of 500ppm-1500ppm, b is in the range of 2.9g/Ah-3.8g/Ah, and c is in the range of 200 ppm-400 ppm.

5. The lithium ion battery according to any one of claims 1 to 4, wherein the Mn dissolution of the lithium ion battery after 2000 charge-discharge cycles at 45°C is less than 700 ppm.

6. The lithium ion battery according to any one of claims 1 to 5, wherein the lithium ion battery meets the following formula:

$$0.75 \leq (M_1{*}\eta_1{*}A_1 + M_2{*}\eta_2{*}A_2){*}b{*}c/(a{*}A_2{*}1000) \leq 1.48.$$

7. The lithium ion battery according to any one of claims 1 to 6, wherein the ratio of y to x is in the range of 0.52-0.58.

8. The lithium ion battery according to any one of claims 1 to 7, wherein based on the total mass of the positive electrode active material, $A_1$ is in the range of 75%-95%.

9. The lithium ion battery according to any one of claims 1 to 8, wherein the ternary material is represented by a general formula of $LiNi_{a1}Co_{b1}X_{c1}C_2$,
wherein $0 \leq a1 \leq 1$, $0 \leq b1 \leq 1$, $0 \leq c1 \leq 1$, and $a1+b1+c1=1$; and X is at least one metal element from Group IIIB to Group VA.

10. The lithium ion battery according to any one of claims 1 to 9, wherein based on the total molar amount of Ni, Co and X in the ternary material, the percent by mole of Ni in the ternary material is in the range of 80%-95%.

FIG. 1

FIG. 2

## INTERNATIONAL SEARCH REPORT

| International application No. |
|---|
| **PCT/CN2021/126905** |

**A. CLASSIFICATION OF SUBJECT MATTER**

H01M 4/36(2006.01)i; H01M 4/485(2010.01)i; H01M 4/505(2010.01)i; H01M 4/54(2006.01)i; H01M 4/56(2006.01)i; H01M 4/58(2010.01)i; H01M 10/0525(2010.01)i; H01M 4/525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; WOTXT; EPTXT; USTXT; CNKI: 比亚迪, 锂, 电池, 磷酸锰铁锂, 磷酸铁锰锂, 三元, 磷酸, 镍, 钴, 锰, 铝, 首次, 效率, 容量, 石墨, lithium, battery, phosphate, iron, manganese, +LI+O2+, +LI+PO4+, graphite, efficiency, capacity, +mAh+

**C. DOCUMENTS CONSIDERED TO BE RELEVANT**

| Category* | Citation of document, with indication, where appropriate, of the relevant passages | Relevant to claim No. |
|---|---|---|
| A | CN 107565094 A (SHANGHAI MAPLE AUTOMOBILE CO., LTD.) 09 January 2018 (2018-01-09) description paragraphs [0006]-[0214] | 1-10 |
| A | CN 106450481 A (GRADUATE SCHOOL AT SHENZHEN, TSINGHUA UNIVERSITY) 22 February 2017 (2017-02-22) entire document | 1-10 |
| A | CN 102362384 A (HITACHI VEHICLE ENERGY LTD.) 22 February 2012 (2012-02-22) entire document | 1-10 |
| A | CN 108321385 A (BEIJING NATIONAL BATTERY TECHNOLOGY CO., LTD.) 24 July 2018 (2018-07-24) entire document | 1-10 |
| A | JP 2003036846 A (SHIN KOBE ELECTRIC MACH CO., LTD.) 07 February 2003 (2003-02-07) entire document | 1-10 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 December 2021** | **20 December 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/126905**

| Patent document cited in search report | | | Publication date (day/month/year) | Patent family member(s) | | | Publication date (day/month/year) |
|---|---|---|---|---|---|---|---|
| CN | 107565094 | A | 09 January 2018 | None | | | |
| CN | 106450481 | A | 22 February 2017 | CN | 106450481 | B | 04 June 2019 |
| CN | 102362384 | A | 22 February 2012 | WO | 2011027503 | A1 | 10 March 2011 |
| | | | | CN | 102362384 | B | 09 October 2013 |
| | | | | US | 2012009452 | A1 | 12 January 2012 |
| | | | | JP | 5554780 | B2 | 23 July 2014 |
| CN | 108321385 | A | 24 July 2018 | None | | | |
| JP | 2003036846 | A | 07 February 2003 | JP | 3979044 | B2 | 19 September 2007 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011175816X